# EUROPEAN PATENT APPLICATION

(11) **EP 2 015 444 A2**
(43) Date of publication of application: **14.01.2009**
(21) Application number: 08011979.5
(22) Date of filing: 03.07.2008
(51) Int. Cl.: H02P 25/04

(54) **Control system for a single phase motor, for instance a motor in a ventilator system**

(30) Priority: 11.07.2007 SE 0701697
(71) Applicant: Fläkt Woods AB, 55184 Jönköping (SE)
(72) Inventor: Viberg, Mats, 55628 Jönköping (SE)
(74) Representative: Pitkänen, Hannu Alpo Antero

(57) **Abstract**

A device for controlling the rotational speed of a single phase alternating current motor and as an example a motor (5) in a ventilator system and where this regulation is done since in a phase conductor 1 there is a transistor switch 3 and a motor 5 and where the transistor switch (3) has a capacitor (4) connected in parallel and where inside the motor (5) there is a second capacitor (6) connected. The principle for the control of the rotational speed is done with a pulse width modulation of the alternating current and this pulse width modulation is obtained since the transistor switch closes at the zero-crossing and remains closed to a optional point at the sine wave when the transistor switch opens when the capacitor (4) is charged instantaneous to after that start the discharge of the same, which means that the voltage over the motor (5) do not fall to zero, instead a gradual reduction of the voltage occurs, which results in a that the motor is running more smoothly and silent.

## Description

The present invention relates to a control principle for a single phase alternating current motor and then as an example a motor in a ventilator system and carried out according to claim 1.

The new control equipment, the new operating system, is intended for a single phase alternating current motor and particularly for systems where these motors are components of a ventilator system. The construction of the system is in present invention a motor with their in parallel connected capacitor and that before the motor there is a transistor switch connected in series which also has a capacitor connected in parallel and where the transistor switch with it's in parallel connected capacitor makes the desired control of the rotational speed possible.

The previous for this purpose known devices suffer from different disadvantages. The technique which is used for the regulation of the rotational speed is usually based upon that parts of the sine wave are cut away. Examples of this technique is depicted in EP 0 989 666 A1. Also US 5,796,245 use techniques where parts of the sine wave are cut away in the front edge as well as GB 2064 240 A.

In installations, for instance in ventilations systems there are often sound problems, which are difficult to solve in those cases where the motor control is done with triac-solutions which are constructed with the, in the above mentioned patent publications, specified principles or in equivalent, on the market existing solutions.

The problem refers to the disturbing sound from the motor which are caused by the electric transients who leads to EMC-problems.

The present constructions can be completed with for instance electric filtering, but is then often getting complicated and accordingly expensive at the same time as quality and function notwithstanding isn't optimal.

The object of the present invention is to counteract and as far as possible eliminate the above mentioned problems. Moreover the invention will bring the state of the art in this domain further in different respects. Those objects are achieved according to present invention by a device of the in the preamble depicted art which in essential is constituted, as appears from the characteristic part of claim 1.

Further characteristics of and advantages with the invention appears from following description with reference to the attached drawings, which shows a preferred, but not limiting design example of a control system.

In the now showed and described implementation of the control system shows:
Figure 1 in detail a diagrammatic circuit diagram according to the invention, and
Figure 2 in detail diagrammatic views of the sine wave according to the invention.

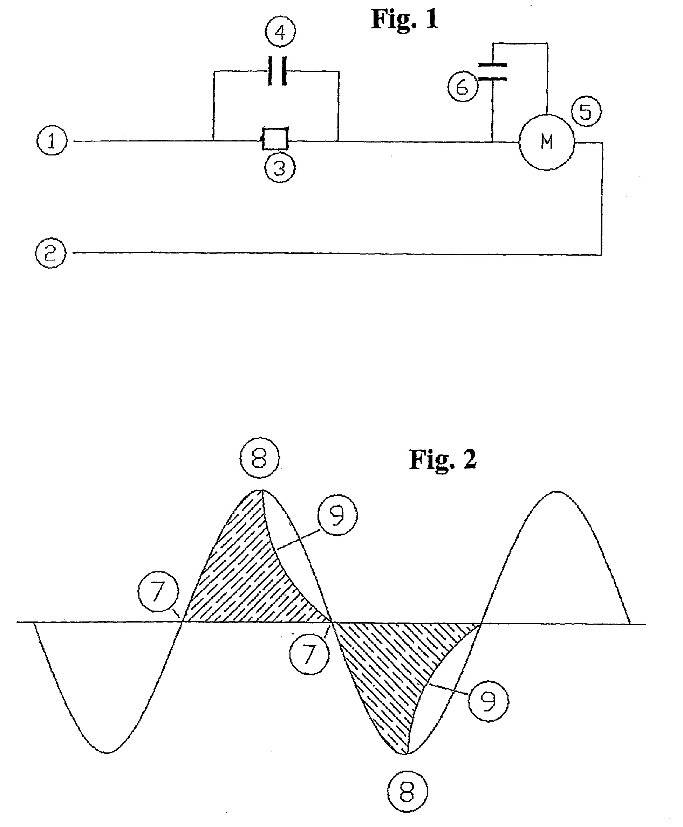

Figure 1 shows the principle of the control system according to the invention and than particularly the control system for a ventilator motor.
In the diagram there are a phase conductor 1 and a neutral conductor 2
In the phase conductor 1 there is a transistor switch 3 and a motor 5. The transistor switch 3 has a capacitor 4 connected in parallel and in parallel with the motor 5 there is a second capacitor 6.
One characteristic for the invention is that the capacitance of the capacitor 6 is adapted to the motor power at the same time as another characteristic of the invention is that the capacitance of the capacitor 4 is chosen with approximately the same order of magnitude as the capacitor 6.

Figure 2 shows diagrammatic how the sine wave in the phase conductor 1 is regulated by the equipment of the invention.
The principle for the control equipment is that the control of the rotational speed, particularly of a ventilator motor, is done with a pulse width modulation of the alternating current. By a pulse width modulation according to the invention the transistor switch 3 is closed at or near the zero-crossing of the phase conductor 1, i.e. when the voltage is 0 or near zero in the phase conductor. Depending on the required rotational speed of the motor 5, the transistor switch 3 is closed at varying distant at the sine wave and can as an example be closed right up to the top of the sine wave - to the point 8 in figure 2 - or further. When the transistor switch 3 opens the capacitor 4 is instantaneous charged and this follows directly by a discharge of the capacitor 4. Accordingly, the voltage over the motor 5 will not fall to a zero value during the time as the discharge occurs, but instead it will be a gradually reduction in the voltage and, accordingly, by the power fed to the motor, as is diagrammatic indicated in figure 2.
Accordingly, the output voltage to the motor 5 is produced by a combination of the transistor switch 3 and the capacitor 4. The result of this interaction between the transistor switch 3 and the capacitor 4 is that the motor 5 runs more smoothly and runs consequently more silent compare to alternative solutions, based on TRIAC or equivalent systems for control of the voltage to the motor.
In de present invention the output voltage to the motor is controlled by a microprocessor - not described in this application - where a control algorithm closes the transistor switch 3 in the zero-crossing of the sine wave and opens it at an optional point in the sine wave. The novelty in the invention is that the transistor switch 3 is equipped with the in parallel connected capacitor 4 which gives the soft, damping functions of the voltage in the phase conductor 1 forwards to the motor 5, which means that the capacitor 4 feeds a gradually decreased voltage, and accordingly power to the motor 5 after the transistor switch 3 has opened.

Another important function of the invention is that the value of the capacitor 4 is almost the same as the capacitor 6 which has a value which is selected depending on the motor power. For instance is a capacitor 6 for a ventilator motor usually in the order of magnitude of 2 µF for a motor of 100 watt and according to the invention the capacitor 4 is then selected with the same or approximate the same capacitance.
It is shown empirical that when c1 = c2 (c1 is the capacitance of the capacitor 4 and c2 is the same of the capacitor 6) maximal sound reduction is obtained. If c1 is decreased towards a zero value an increased sound level is obtained and the (ventilator) system then gets the same function as a genuine traditional control system.
If c1 increases to a larger value than c2 the results is that the lowest possible running speed increases and this implies that a very large value of c1 results in a running speed that can not be reduced or only in marginal be reduced.

The technical effect which is obtained with the invention is accordingly that:
- the sound level decreases.
   In a ventilator system where a motor with controlled rotational speed mostly is used it always occurs more or less disturbing sounds from the motor depending on electrical transients which in turn gives EMC-problems.
   These sound problems are reduced and are nearly eliminated by use of the capacitor 4 which is connected in parallel with the transistor switch. 3.
- a control equipment is developed with low costs.
   To reach such a low sound level in the (ventilator) system which is the results of the invention, existing solutions must be constructed with for instance electric filtering alternative combined with other mechanic equipment.
- improved efficiency of the system.

By use of a transistor switch of the type MOSFET the power loss in the transistor is decreased, since by this construction a pure resistor with low resistance is obtained instead of a usual triac-solution.

### PARTS LIST

- 1= phase conductor: 2= neutral
- 3= transistor switch: 4= capacitor
- 5= motor: 5= capacitor
- 7= closes the transistor switch: 8= opens the transistor switch
- 9= discharge of the capacitor:

## Claims

1. Device for controlling the rotational speed of a single phase alternating current motor, where this regulation is done sine in a phase conductor 1 there is a transistor switch 3 and a motor 5, where the transistor switch (3) has a capacitor (4) connected in parallel and inside the motor (5) there is a second capacitor (6) connected and where interacting between the transistor switch (3) and the capacitor (3) means that the control of the rotational speed is done with a pulse width modulation which is obtained since the transistor switch (3) closes at the zero-crossing of the sine wave and remains closed to a optional point at the sine wave where the transistor switch (3) opens and at that moment when the capacitor (4) is charged instantaneous and after that the discharge of the capacitor starts, **characterized in that** the voltage over the motor (5) do not fall to an zero-value when the transistor switch (3) are opened, instead, at this time a gradual reduction of the voltage occurs and, accordingly, at the power fed to the motor (5) since the discharge of the capacitor (5) starts or occurs at the same time as the transistor switch opens.

2. Device according to claim 1, **characterized in that** the variation or appearance in the output voltage to the motor (5), is controlled by the combination of transistor switch (3) and the capacitor (4) which in turn is connected in parallel with the same, which means that the voltage over the motor decreases gradually after the transistor switch is opened and the discharge of the capacitor (4) has started, which results **in that** the motor (5) is running more smoothly and silent.

3. Device according to claim 1, **characterized in that** the size of the capacitor (4), in microfarad, is zero or almost the same as the other capacitor (6) which is built in at the motor (5).

4. Device according to claim 1, **characterized in that** an control algorithm closes the transistor switch (3) at the zero-crossing of the sine wave and opens it at an optional point of the sine wave, which means that the speed of the motor (5) is influenced by that, dependent on when at the sine wave the transistor switch (3) opens.

5. Device according to claim 1, **characterized in that** the sound level in the system, particularly a ventilator system, where the motor (5) is mounted, is decreased as a result of better operating conditions, through decreased or almost eliminated electric transients.
